# EUROPEAN PATENT SPECIFICATION

(11) **EP 4 116 241 B1**
(45) Date of publication and mention of the grant of the patent: **25.09.2024**
(21) Application number: 22182859.3
(22) Date of filing: 04.07.2022
(51) Int. Cl.: B65G 59/00, B65G 59/02, B65G 59/04, B65G 47/91

(54) **COMPACT DEPALLETIZING MACHINE**
KOMPAKTE ENTPALETTIERMASCHINE
MACHINE DE DÉPALETTISATION COMPACTE

(30) Priority: 09.07.2021 IT 202100018143
(43) Date of publication of application: 11.01.2023
(73) Proprietor: OMA S.R.L., 37069 Villafranca di Verona (VR) (IT)
(72) Inventor: BALDI, Eros, 37069 VILLAFRANCA DI VERONA (VR) (IT); BALDI, Fedra, 37069 VILLAFRANCA DI VERONA (VR) (IT); BALDI, Fulvio, 37069 VILLAFRANCA DI VERONA (VR) (IT)
(74) Representative: Studio Torta S.p.A.

(56) References cited:
- EP-A1- 3 812 320
- WO-A1-2015/132720
- CN-A- 101 229 899
- ES-T3- 2 375 010

## Description

The present invention relates to a compact depalletizing machine.

More in particular, the present invention relates to a compact depalletizing machine for pallets/platforms of glass bottles, tins, cans for beverages and the like. Use to which the following disclosure will make explicitly reference without thereby losing generality.

As is known, in the machine packaging filed there are numerous models of depalletizing machines that are capable of unpacking in a completely automated manner a pallet of bottles, tins or cans, providing at the outlet a succession of bulk products, ready to be sent to other machines.

The depalletizing machines for pallets of tins and cans most currently widespread on the market comprise: a lifting platform, on which the pallet to be unpacked is placed; a bulk-products storage shelf, which is placed beside the lifting platform, immovable in space at a given height from the ground generally greater than 2 meters, and is dimensioned so as to be able to accommodate an entire layer of tins or cans; and a transversal pushing blade, which is arranged in a horizontal position on the opposite side of the lifting platform with respect to the bulk-products storage shelf, at a height from the ground slightly greater than that of the bulk-products storage shelf.

The lifting platform is capable of step lifting the pallet to be unpacked, so as to bring, each time, the upper layer of the pallet to be unpacked at the level of the bulk-products storage shelf.

The transversal pushing blade, in turn, is horizontally movable at the top of the pallet to be unpacked, so as to come into abutment against the lateral side of the layer of the pallet which is at the height of the bulk-products storage shelf, i.e. the upper layer of the pallet, and then move horizontally towards the bulk-products storage shelf, pushing in block the entire upper layer of the pallet on the adjacent bulk-products storage shelf.

Finally, the above-described depalletizing machines are provided with an outlet conveyor, which is capable of transferring outside of the machine the tins or the cans arriving on the bulk-products storage shelf, providing at the outlet a succession of bulk tins or cans.

Unfortunately, although ensuring a very high hourly productivity, the above-described depalletizing machines have high dimensions that prevent the installation thereof in small-sized bottling or boxing lines.

Moreover, the above-described depalletizing machines have in average very high operating costs, mainly due to the high consumption of electric energy.

The depalletizing machines used for unpacking pallets of glass bottles and the like, for example, require very powerful electric motors, with the high energy consumptions that this entails. Notoriously, in fact, a layer of bottles has a rather high weight, hence the pushing blade has to exert a remarkable push in order to succeed in pushing/moving the entire layer of bottles onto the bulk-products storage shelf.

In patent application EP3812320 A1 there is described a compact depalletizing machine that overcomes a good part of the above-described drawbacks, anyway ensuring a remarkable hourly productivity.

In the depalletizing machine object of patent application EP3812320 A1, the bulk-products storage shelf is replaced by a small auxiliary movable platform, which is dimensioned so as to accommodate one single row of products at a time, and is vertically movable alongside the lifting platform between an upper position in which the auxiliary movable platform is adjacent to the top of the pallet to be unpacked, substantially coplanar to the upper layer of the pallet, and a lower position in which the auxiliary movable platform is spaced beneath the top of the pallet to be unpacked, at the side of a small belt conveyor, which is capable of receiving and transferring the bulk products outside of the depalletizing machine.

Additionally, the depalletizing machine object of patent application EP3812320 A1 uses, instead of the pushing blade, a gripping head which is movable forwards and backwards on a horizontal reference plane intersecting the top of the pallet to be unpacked, and is capable of moving one row of products at a time from the top of the pallet to be unpacked onto the auxiliary movable platform stationary in the upper position.

More in detail, the gripping head of the depalletizing machine object of patent application EP3812320 A1 comprises: a transversal support beam, which is arranged in a horizontal position at the side of the top of the pallet to be unpacked, and is horizontally movable to and from the upper layer of the pallet to be unpacked while remaining parallel to itself; an auxiliary floating bar, which is fixed to the support beam so as to remain suspended alongside and parallel to the latter, and is capable of moving vertically with respect to the support beam while remaining parallel to itself; and a vacuum gripping equipment which is located on the side of the auxiliary floating bar, on the opposite side with respect to the support beam, and is capable of grasping and holding a single row of products by gripping the lateral side of the products.

Even more in detail, the transversal support beam is capable of moving forwards and backwards on the horizontal reference plane, between a first operating position in which the support beam arranges the auxiliary bar adjacent to a lateral row of the upper layer of the pallet, so that the vacuum gripping equipment can firmly grasp and hold the entire row of products; and a second operating position in which the support beam is placed at the side of the lifting platform, with the floating bar vertically aligned to the auxiliary movable platform, so as to allow the vacuum gripping equipment to deposit the row of products onto the auxiliary movable platform stationary in the upper position.

Although operating excellently, the compact depalletizing machine object of patent application EP3812320 A1 requires the pallet to be unpacked to be placed on the lifting platform in a quite precise manner, because the vacuum gripping equipment present on the side of the floating bar has to be able to simultaneously rest on all of the products of the lateral row of the upper layer of the pallet. Working condition difficult to obtain if the lateral side of the pallet stationary on the lifting platform is greatly inclined with respect to the transversal support beam.

Aim of the present invention is to make the depalletizing machine object of patent application EP3812320 A1 still more versatile and efficient.

According to the present invention, there is provided a depalletizing machine as defined in Claim 1 and preferably, though not necessarily, in any one of the claims dependent thereon.

The present invention will now be described with reference to the accompanying drawings, which illustrate a non-limiting example embodiment thereof, wherein:
- Figure 1 is an axonometric view of a depalletizing machine realized according to the teachings of the present invention, with parts in section and parts removed for clarity's sake;
- Figures 2 and 3 show some details of the depalletizing machine illustrated in Figure 1, with parts in section and parts removed for clarity's sake;
- Figure 4 is a side view of the depalletizing machine illustrated in Figure 1, sectioned approximately along the midplane of the machine and with parts removed for clarity's sake;
- Figure 5 shows on an enlarged scale a detail of Figure 4;
- Figure 6 is a perspective view of the upper part of the depalletizing machine illustrated in the previous figures, with parts removed for clarity's sake;
- Figure 7 is a side view of the upper part of the depalletizing machine illustrated in the previous figures, sectioned approximately along the midplane of the machine and with parts removed for clarity's sake, with the gripping head in a different operating configuration;
- Figure 8 is a rear view of the gripping head visible in Figures 6 and 7, with parts removed for clarity's sake;
- Figure 9 is a bottom view of the gripping head illustrated in Figure 8 with parts removed for clarity's sake; whereas
- Figure 10 schematically shows an operating step of the depalletizing machine illustrated in the previous figures.

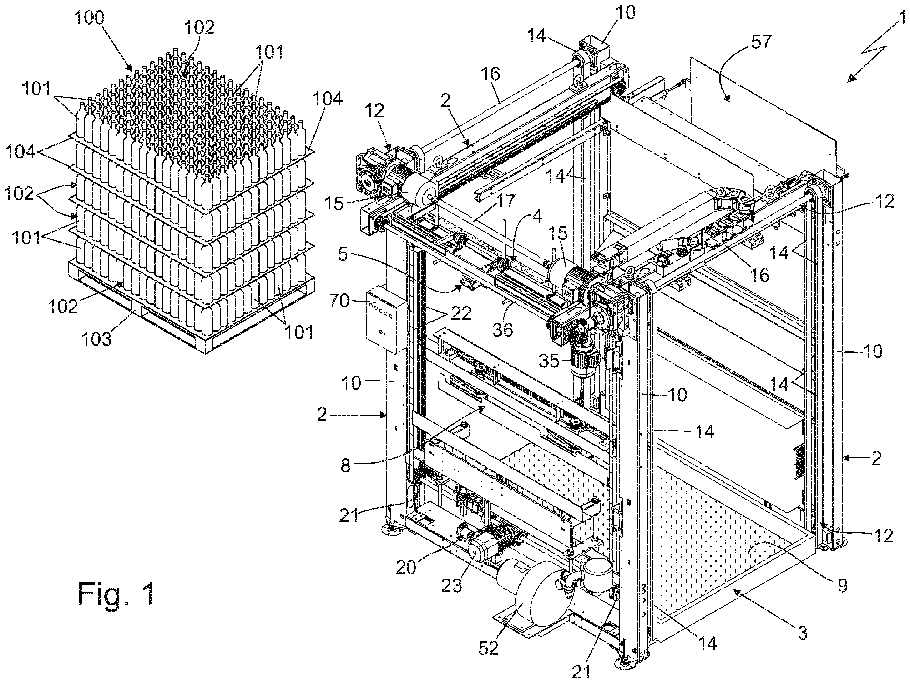

With reference to Figures 1 to 5, reference number 1 denotes, as a whole, a depalletizing machine adapted to unpack in automatic manner a pallet or platform of products 100, providing at outlet a succession of bulk products, ready to be used by other machines.

In other words, the depalletizing machine 1 is adapted to receive at inlet a pallet of products 100 and to provide at outlet a succession of bulk products.

More in detail, the depalletizing machine 1 is particularly adapted to unpack in automatic manner a pallet 100 of bottles 101, providing at outlet a succession of bulk bottles 101, ready to be used by other machines.

The depalletizing machine 1 is thus particularly adapted to unpack in automatic manner an object formed by a given number of ordered and compact layers 102 of bottles 101 which are stacked on top of each other, and are resting on a traditional transportation platform 103, usually having a rectangular or square shape.

Additionally, each layer of bottles 102 is basically formed by a given number of rows of bottles 101 which are arranged closely juxtaposed to each other, and are located resting on a support-board or tray 104 that, in turn, rests on the immediately underlying layer of bottles 102.

Clearly, the depalletizing machine 1 could also be used to unpack in automatic manner a pallet of tins, cans for beverages or similar products, providing at the outlet a succession of bulk products, ready to be used by other machines.

With reference to Figures 1, 2, 3 and 4, the depalletizing machine 1 firstly comprises a rigid supporting framework 2, which is preferably made of metal material, and more in detail of rectilinear metal section-bars firmly fixed to each other, and is adapted to stably rest on and optionally be anchored to the ground.

The depalletizing machine 1 additionally comprises: a lifting platform 3, which is adapted to receive resting on it the pallet to be unpacked 100, and is fixed to the supporting framework 2 with the capability of moving vertically so as to be able to lift from the ground the pallet to be unpacked 100 and to place the upper layer 102 of the pallet at an elevated and substantially horizontal reference plane P, which is at a predetermined height h₁ from the ground; and an auxiliary movable platform 4, which is dimensioned so as to temporarily receive/accommodate one single row of bottles 101 or other products coming from the pallet 100 stationary on the lifting platform 3, and is fixed to the supporting framework 2 alongside the lifting platform 3, with the capability of moving vertically in a separate and independent manner with respect to the lifting platform 3.

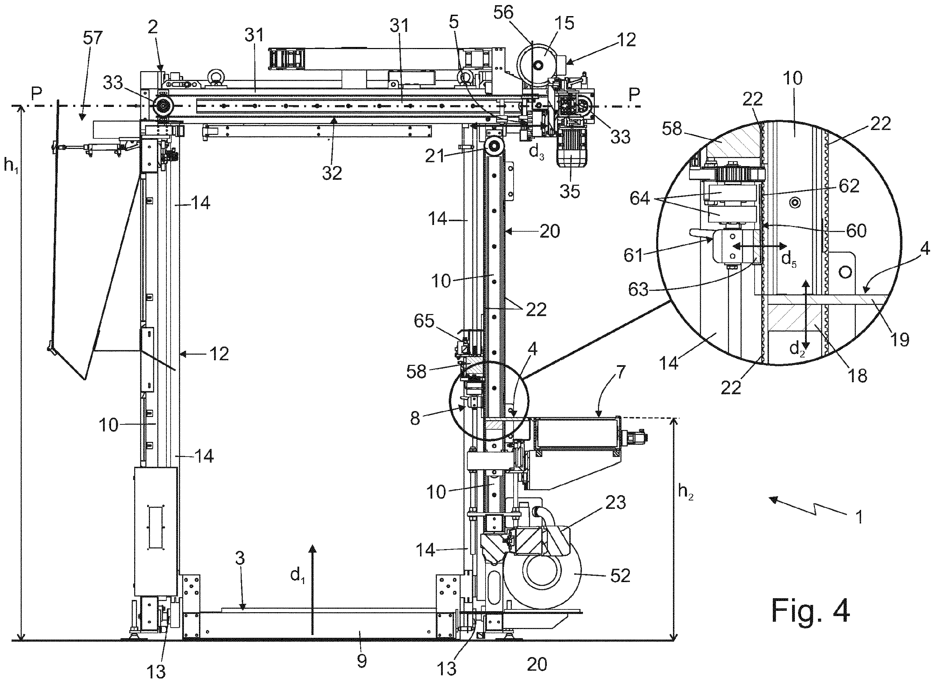

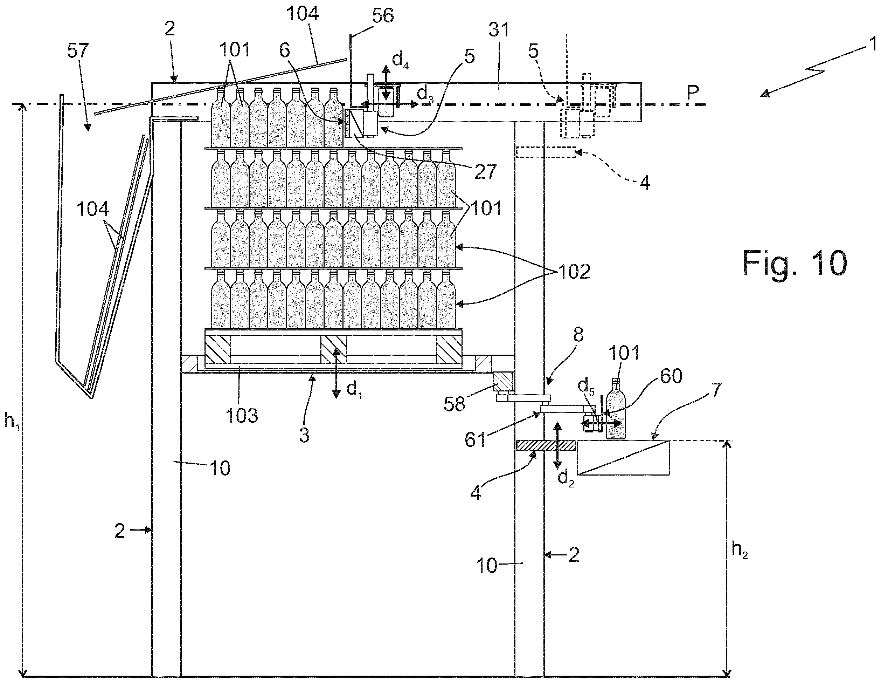

More in detail, the auxiliary platform 4 is oblong in shape and is vertically movable at the side of the lifting platform 3, between a loading position (see Figures 1, 3 and 5) in which the auxiliary platform 4 is aligned to the horizontal reference plane P, i.e. is substantially coplanar to the elevated plane P, and is thus capable of loading/ receiving a row of bottles 101 belonging to the upper layer 102 of the pallet to be unpacked 100, and an unloading position (see Figures 4 and 10) in which the auxiliary movable platform 4 is at a predetermined height h₂ from the ground, spaced beneath the elevated plane P, and is capable of unloading the previously loaded row of bottles 101.

The lifting platform 3, on the other hand, is adapted to lift from the ground the pallet to be unpacked 100 so as to align, each time, the upper layer 102 of the pallet 100 with the elevated plane P.

Preferably, the elevated plane P is moreover at a height h₁ from the ground ranging between 1,8 and 2,6 m (meters), and/or greater than the maximum height of the pallets 100 to be unpacked.

When it is in the unloading position, in turn, the auxiliary platform 4 is preferably at a height h₂ ranging between 0,5 and 1,2 m (meters).

Additionally the depalletizing machine 1 also comprises a gripping head 5, which is fixed to the supporting framework 2 so as to be able to move horizontally on the elevated plane P, above the lifting platform 3 and the auxiliary platform 4, and is adapted to transfer one single row of bottles 101 at a time from the top of the pallet to be unpacked 100 up to the auxiliary platform 4 stationary in the loading position.

More in detail, the gripping head 5 is provided with a vacuum gripping equipment 6 which is capable of firmly grasping and holding all of the bottles 101 that form a row of bottles 101 of the upper layer 102 of the pallet to be unpacked 100, gripping by vacuum on the side/trunk of the bottles 101.

In other words, the vacuum gripping equipment 6 is structured/dimensioned so as to grip by vacuum the side/trunk of the bottles 101 forming the row of bottles 101, regardless of the shape and/or dimensions of the single bottles 101.

Therefore, the vacuum gripping equipment 6 is capable of firmly grasping and holding also tins, cans for beverages and other products.

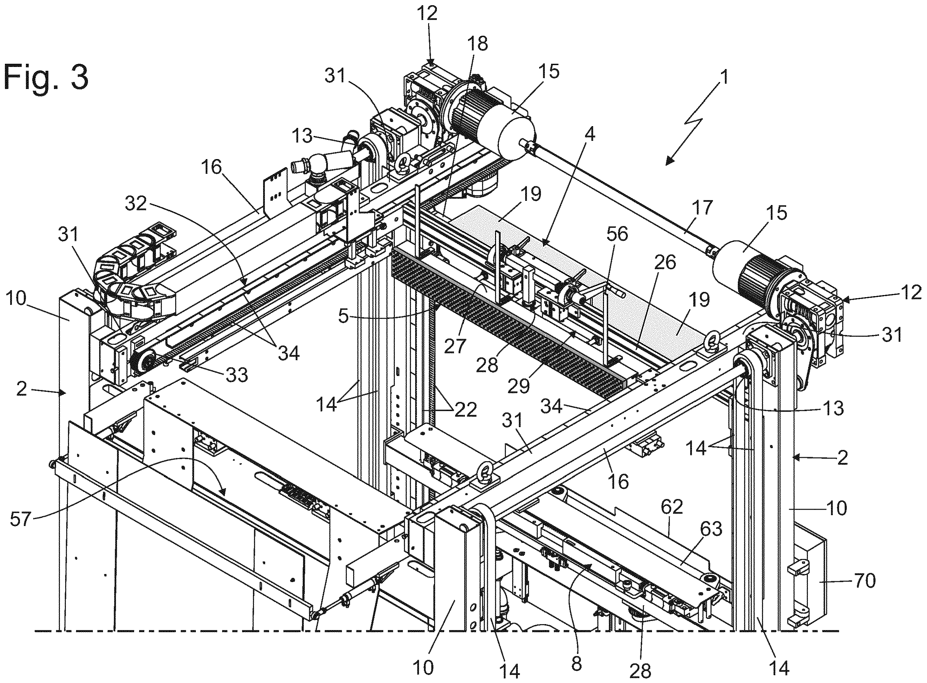

The gripping head 5, in addition, is movable forwards and backwards on the elevated plane P while remaining always on the plane parallel to itself, between a first operating position (see Figures 1, 2, 4, 5 and 6) in which the gripping head 5 is arranged at the side of the lifting platform 3, substantially vertically aligned to the auxiliary platform 4, and a second operating position (see Figures 3 and 10) in which the gripping head 5 is vertically aligned to the lifting platform 3, and is arranged adjacent to the bottles 101 that form a lateral row of the upper layer 102 of the pallet 100 stationary on the lifting platform 3, so that the vacuum gripping equipment 6 can firmly grasp and hold the bottles 101 of said lateral row.

With reference to Figures 1, 2, 3 and 4, additionally the depalletizing machine 1 preferably also comprises: an outlet conveyor 7, which is adapted to transfer the bulk bottles 101 or other products outside of the depalletizing machine 1, is preferably firmly fixed to the supporting framework 2, and is located beneath the elevated plane P, beside the vertical corridor engaged by the auxiliary platform 4 preferably on the opposite side with respect to the lifting platform 3, so as to be adjacent to the auxiliary movable platform 4 stationary in the unloading position; and a products moving assembly 8, which is preferably firmly fixed to the supporting framework 2, and is adapted to push, on command, the bottles 101 from the auxiliary platform 4 to the outlet conveyor 7, when the auxiliary movable platform 4 is beside the outlet conveyor 7, i.e. when the auxiliary platform 4 is in the unloading position.

More in detail, the outlet conveyor 7 is preferably provided with a product resting and/or advancing plane which is horizontally aligned and flanked to the auxiliary platform 4 in the unloading position. In other words, the product resting and/or advancing plane of the outlet conveyor 7 is at a height from the ground substantially equal to the height h2.

The products moving assembly 8, in turn, is preferably structured so as to be able to horizontally push an entire row of bottles 101 from the auxiliary platform 4 stationary in the unloading position to the immediately adjacent outlet conveyor 7.

With reference to Figures 1, 2, 3 and 4, in the example shown, in particular, the rigid supporting framework 2 preferably has a substantially parallelepiped-shaped cage structure, and the lifting platform 3 is preferably placed inside the supporting framework 2 with the capability of moving vertically while remaining inside the supporting framework 2.

Additionally, the lifting platform 3 preferably comprises: a horizontal deck 9 with a plate-like structure, preferably made of metal material, which is preferably substantially rectangular in shape, is preferably fixed in a vertically slidable manner to the four vertical uprights 10 of the supporting framework 2, and is dimensioned so as to be able to receive resting on it the transportation platform 103 of the pallet to be unpacked 100; and optionally also a preferably electrically- or pneumatically- operated, centering assembly (not visible in the figures), which is placed on the horizontal deck 9, and is capable of centering the platform 103 of the pallet to be unpacked 100 on the rigid platform 9 and optionally also firmly locking the transportation platform 103 on the rigid deck 9.

In the example shown, in particular the horizontal deck 9 preferably has a rectangular shape substantially complementary to that of the transportation platform 103 of the pallet to be unpacked 100.

Preferably, the depalletizing machine 1 additionally comprises a first, preferably electrically-operated, driving assembly 12, which is adapted to move, on command and preferably also in a step manner, the horizontal deck 9 of the lifting platform 3 along the vertical uprights 10 of the supporting framework 2, in a substantially vertical direction d₁, so as to be able to vary/adjust, on command, the height of the horizontal deck 9 from the underlying ground.

In other words, the driving assembly 12 is adapted to progressively move the lifting platform 3 upwards along the vertical uprights 10 of the supporting framework 2, so as to align each time the upper layer 102 of the pallet to be unpacked 100 to the elevated plane P.

In the example shown, in particular, the driving assembly 12 preferably comprises, on each vertical upright 10 of the supporting framework 2: a pair of gear wheels 13 coplanar to each other, which are fixed in axially rotatable manner to the vertical upright 10, in the proximity respectively of the upper end and of the lower end of the vertical upright 10; and an roller chain 14 which is looped around the two gear wheels 13, so that the two rectilinear sections of the chain 14 are parallel to the longitudinal axis of the vertical upright 10, i.e. substantially vertical.

Additionally, the driving assembly 12 preferably also comprises at least one and more conveniently a pair of electric motors 15, each of which is preferably fixed cantilevered to the top of a corresponding vertical upright 10 of rigid framework 2, and is adapted to drive into rotation, selectively in both rotation directions, the gear wheels 13 fixed to the upper ends of at least two adjacent vertical uprights 10 of the rigid framework 2.

More in detail, each electric motor 15 is mechanically connected to the upper gear wheels 13 of two adjacent vertical uprights 10 preferably by means of a gearing cascade that moreover comprises a drive shaft 16, which extends horizontally astride of the two vertical uprights 10 and directly supports the upper gear wheels 13.

Preferably, the two electric motors 15 are furthermore arranged horizontally aligned with and coaxial to each other and are optionally also mechanically connected to one another by means of a transversal driving shaft 17.

The horizontal deck 9 of lifting platform 3 is rigidly fixed to a branch of each roller chain 14 of driving assembly 12, so as to move along the vertical uprights 10 of the supporting framework 2 together with the chains 14.

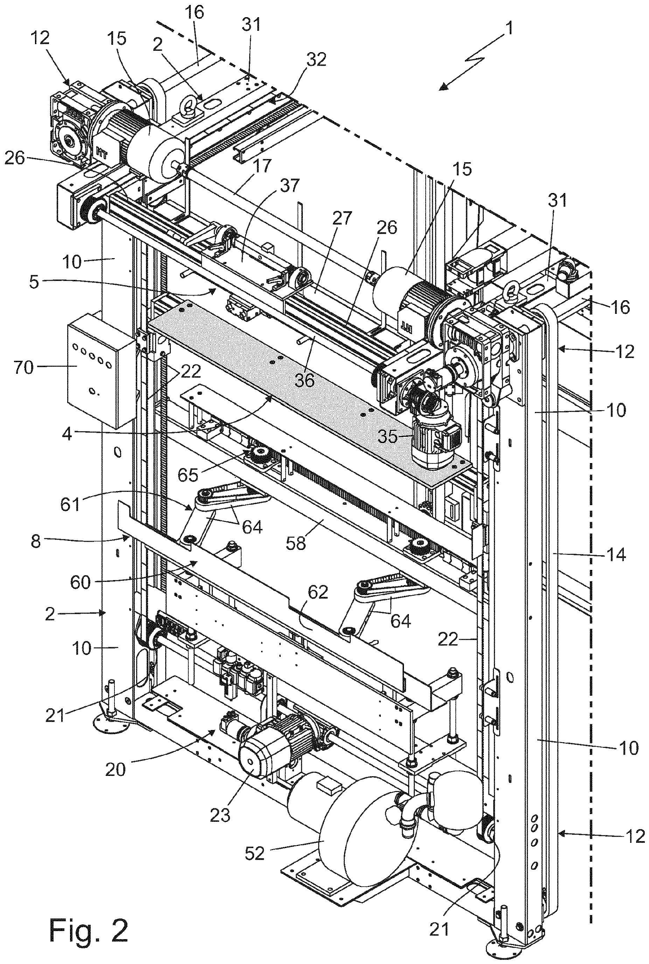

With reference to Figures 2, 3, 4 and 5, the auxiliary movable platform 4, on the other hand, is oblong in shape and is preferably fixed in a vertically slidable manner to a pair of vertical uprights 10 of supporting framework 2, so as to be able to move alongside the lifting platform 3 in a substantially vertical direction d₂.

More in detail, the auxiliary platform 4 extends bridging two adjacent vertical uprights 10 of supporting framework 2, and is preferably butt-fixed to both vertical uprights 10 so as to be able to freely move along the vertical uprights 10.

In the example shown, in particular, the auxiliary platform 4 preferably comprises: a preferably rectilinear and preferably made of metal material, supporting crossbeam 18 which extends horizontally astride of said pair of vertical uprights 10 of supporting framework 2, and has the two ends fixed in freely slidable manner to the vertical uprights 10, so as to be able to move along the vertical uprights 10 in direction d₂ while remaining parallel to itself; and a preferably substantially rectangular-shaped, upper horizontal shelf 19 which is rigidly fixed above the supporting crossbeam 18, preferably with the longer sides parallel to the longitudinal axis of the crossbeam, and is dimensioned so as to accommodate/receive resting on it one single row of bottles 101 or other products.

Preferably, the depalletizing machine 1 is furthermore provided with a second, preferably electrically-operated, driving assembly 20 which is adapted to move on command the supporting crossbeam 18 of auxiliary platform 4 on supporting framework 2, in the direction d₂, i.e. vertically, so as to be able to align, on choice and alternatively, the upper shelf 19 of auxiliary platform 4 to the elevated plane P or to the product resting and/or advancing plane of the outlet conveyor 7.

In other words, the driving assembly 20 is adapted to move the auxiliary platform 4 up and down along the vertical uprights 10 of supporting framework 2, between the loading position and the unloading position.

More in detail, the driving assembly 20 preferably comprises, on each vertical upright 10 of supporting framework 2: a pair of toothed pulleys 21 coplanar to each other, which are fixed in axially rotatable manner to the vertical upright 10, in proximity of the upper end and of the lower end of the vertical upright 10; and a toothed belt 22 which is looped around the two toothed pulleys 21, so that the two rectilinear segments of the belt 22 are parallel to the longitudinal axis of the vertical upright 10.

Preferably, the driving assembly 20 moreover also comprises an electric motor 23, which is preferably fixed cantilevered to a stiffening crossbeam that connects the lower ends of the two vertical uprights 10 flanking the auxiliary platform 4, and is mechanically connected to one of the two toothed pulleys 21 of each pair of toothed pulleys 21 by means of a horizontal drive shaft, so as to be able to drive into rotation the two lower toothed pulleys 21 selectively in both rotation directions.

The two ends of the supporting crossbeam 18 of auxiliary platform 4 are mechanically connected to a branch of the facing belt 22 of driving assembly 20, so as to move along the respective vertical uprights 10 of supporting framework 2 together with the toothed belts 22.

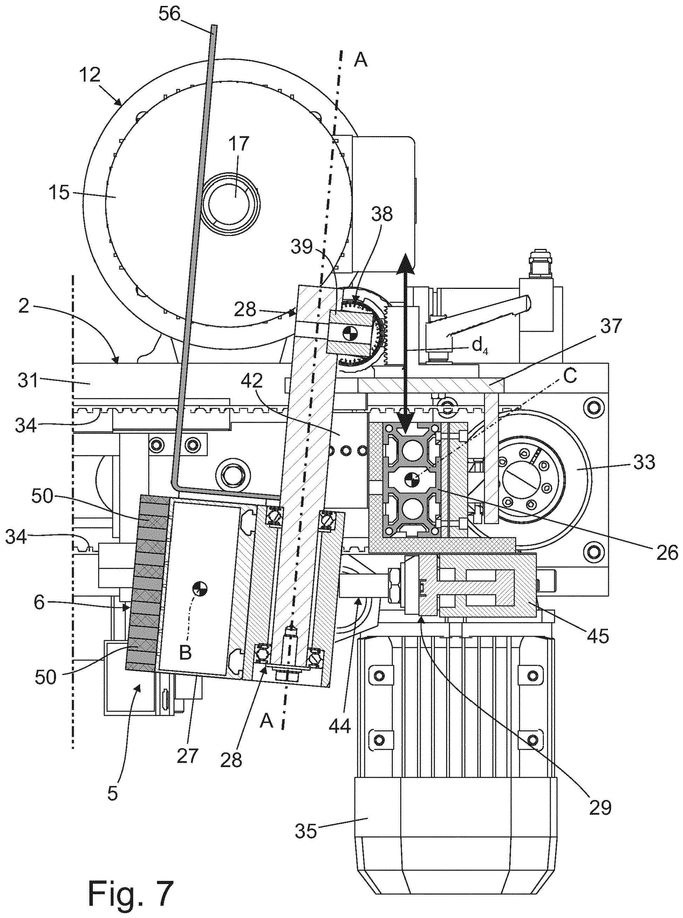

With reference to Figures 2 to 7, the gripping head 5, in turn, is preferably firmly fixed to the top of supporting framework 2, above the lifting platform 3 and the auxiliary movable platform 4, and is capable of freely moving/shifting on the reference plane P in a substantially horizontal direction ds.

In addition, the gripping head 5 comprises: a preferably rectilinear and preferably made of metal material, main support beam 26 which extends on the elevated plane P horizontally and orthogonally to the direction ds, and is fixed in a horizontally slidable manner to the supporting framework 2; and a preferably rectilinear and preferably made of metal material, auxiliary floating bar 27 that directly supports the vacuum gripping equipment 6 and is attached to the support beam 26 so as to remain suspended alongside the latter.

More in detail, the vacuum gripping equipment 6 is preferably placed on a lateral side of the auxiliary floating bar 27, on the opposite side with respect to the support beam 26, so as to be able to rest on the side of the bottles 101 which are at the height of the elevated plane P, and form an entire row of products of the upper layer 102 of the pallet.

Additionally, the auxiliary floating bar 27 is stably fixed to the support beam 26 with the capability of freely oscillating with respect to the latter about a substantially vertical reference axis, so as to be able to vary its orientation with respect to the adjacent support beam 26.

The depalletizing machine 1 is furthermore provided with a floating-bar orienting and locking assembly, which is capable of arranging and stably maintaining the floating bar 27 in a predetermined operating position with respect to the support beam 26, preferably at least when the gripping head 5 is in the first operating position.

More in detail, the floating-bar orienting and locking assembly is preferably adapted to arrange and maintain the floating bar 27 substantially parallel to the support beam 26.

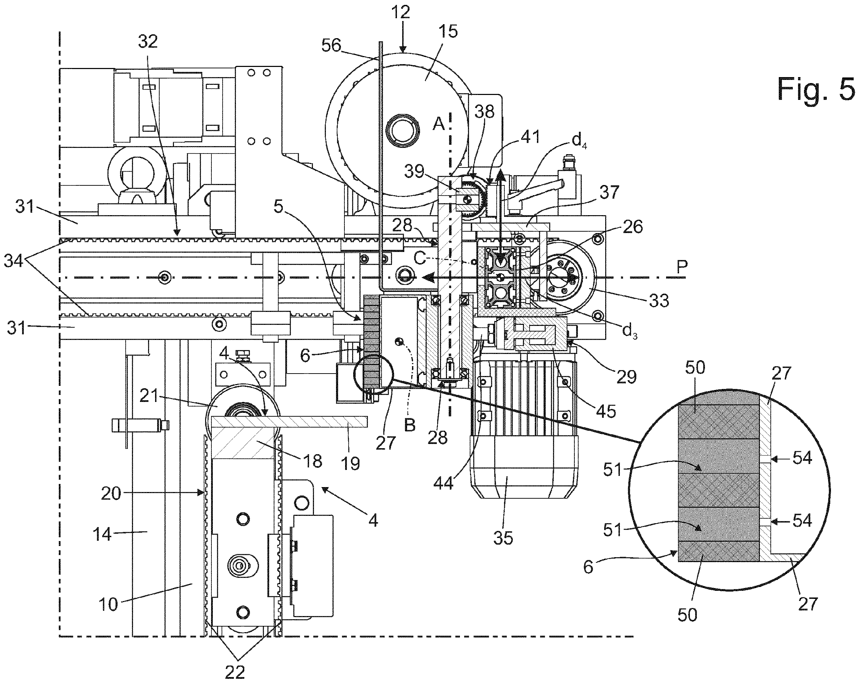

With reference to Figures 5, 6 and 7, in particular, the gripping head 5 is preferably provided with a mechanical swivel joint 28 which is interposed between the auxiliary floating bar 27 and the support beam 26, and allows the floating bar 27 to freely oscillate with respect to the support beam 26 about a reference axis A, which is substantially vertical and substantially orthogonal to the longitudinal axis B of floating bar 27 and/or to the longitudinal axis C of support beam 26.

More in detail, the swivel joint 28 is divided into an upper swiveling section and into a lower swiveling section, which are capable of freely rotating one with respect to the other about axis A. The lower swiveling section is preferably integral with the central section of the auxiliary floating bar 27. The upper swiveling section, in turn, is preferably integral with the central section of support beam 26.

In other words, the swivel joint 28 is preferably interposed between the central section of the auxiliary floating bar 27 and the adjacent central section of the main support beam 26.

Additionally, the gripping head 5 is preferably moreover provided with a preferably electrically- or pneumatically-operated, orienting and locking device 29 which is preferably located on the support beam 26 and/or on the auxiliary floating bar 27, and is capable, on command, of arranging and stably maintaining the floating bar 27 in a predetermined operating position in which the floating bar 27 is preferably substantially parallel to the support beam 26.

Preferably, the floating bar 27 is furthermore vertically movable with respect to the support beam 26, so that its distance from the horizontal reference plane P can be varied.

More in detail, the auxiliary floating bar 27 is preferably hanged/fixed to the support beam 26 also with the capability of moving vertically with respect to the latter, and the gripping head 5 is preferably also provided with a preferably electrically- or pneumatically- operated, actuator device 30 which is capable, on command, of lifting and lowering the floating bar 27 with respect to the main support beam 26.

Preferably, the maximum shift/stroke of the auxiliary floating bar 27 in vertical direction is furthermore less than 10 cm (centimeters).

More in detail, the actuator device 30 is preferably interposed between the support beam 26 and the swivel joint 28, and is preferably structured so as to move the swivel joint 28 by a few centimeters upwards and/or downwards with respect to support beam 26, in a direction d₄ substantially vertical and substantially perpendicular to direction ds.

With reference to Figures 1 to 7, in the example shown, in particular, the two ends of support beam 26 are preferably fixed in slidable manner to a pair of horizontal crossbeams 31 of supporting framework 2, which substantially lie on the reference plane P and extend in the direction ds one spaced beside the other, preferably rigidly connecting the upper ends of just as many pairs of vertical uprights 10.

Preferably, the depalletizing machine 1 is moreover provided with a third, preferably electrically-operated, driving assembly 32 which is adapted to move on command the support beam 26 on the horizontal crossbeams 31 of supporting framework 2, in the direction ds, while maintaining the support beam 26 always parallel to itself.

More in detail, the driving assembly 32 preferably comprises, on each horizontal crossbeam 31 of supporting framework 2: a pair of toothed pulleys 33 coplanar to each other, which are fixed in axially rotatable manner to the horizontal crossbeam 31, in the proximity of the two ends of the crossbeam; and a toothed belt 34 which is looped around the two toothed pulleys 33, so that the two rectilinear segments of the same belt 34 are parallel to the longitudinal axis of the horizontal crossbeam 31.

Preferably, the driving assembly 32 furthermore also comprises an electric motor 35, which is preferably fixed cantilevered to one of the two horizontal crossbeams 31 of supporting framework 2, and is mechanically connected to one of the toothed pulleys 33 of each pair of toothed pulleys 33 by means of a horizontal drive shaft 36, so as to be able to drive into rotation the two toothed pulleys 33 selectively in both rotation directions.

The two ends of support beam 26 are mechanically connected each to one branch of the facing toothed belt 34 of driving assembly 32, so as to move along the respective horizontal crossbeams 31 together with the toothed belts 34.

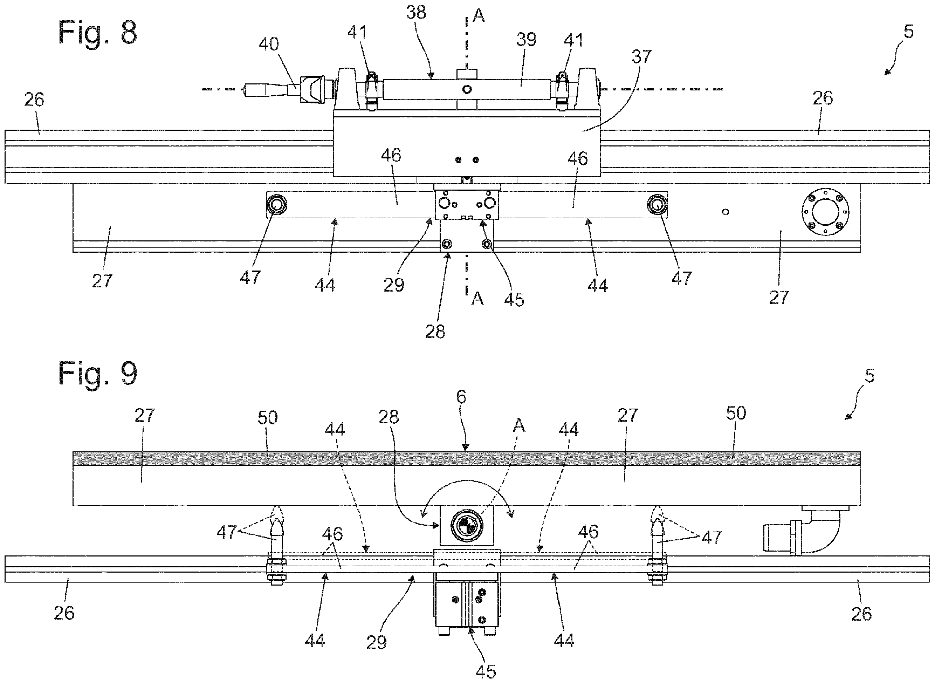

With reference to Figures 3 to 9, additionally the gripping head 5 is preferably provided with an intermediate bracket 37, which directly supports the swivel joint 28 and is firmly fixed to the support beam 26 with the capability of freely moving with respect to the latter in the direction d4.

More in detail, the intermediate bracket 37 preferably has an upside-down L-shaped structure, is placed astride of the central section of support beam 26, and is firmly fixed to the body of support beam 26 with the capability of freely sliding only in vertical direction, i.e. perpendicular to the longitudinal axis C of support beam 26.

Preferably, the swivel joint 28 is furthermore rigidly fixed to the bracket 37 via the interposition of a manually-operated, adjustment mechanism 38 that allows increasing or decreasing by some degrees the tilt angle of the rotation axis A of swivel joint 28 with respect to the horizontal reference plane P.

The rotation axis A of swivel joint 28, therefore, can be tilted by a few degrees with respect to the vertical.

In other words, the rotation axis A of swivel joint 28 lies on a vertical plane which is substantially parallel to the movement direction ds of gripping head 5 on the elevated plane P, and is preferably also perpendicular to the longitudinal axis C of support beam 26.

In the example shown, in particular, the adjustment mechanism 38 is preferably structured so as to be able to modify the tilt angle of the rotation axis A of swivel joint 28 up to a maximum of ±8° with respect to the vertical.

More in detail, with reference to Figures 5 to 8, the adjustment mechanism 38 preferably comprises: a squared-section rectilinear bar 39 which extends above the bracket 37, parallel to the longitudinal axis C of support beam 26, and is firmly fixed to the bracket 37 with the capability of freely rotating about its longitudinal axis; a crank 40 which is fixed to one of the two ends of rectilinear bar 39 so as to allow the user to manually rotate the rectilinear bar 39 about its longitudinal axis; and a pair of manually-operated, locking clamps 41 that are placed in the proximity of the two ends of rectilinear bar 39, and are capable of preventing the rotation of rectilinear bar 39 about its longitudinal axis.

The upper swiveling section of swivel joint 28 is preferably fixed in rigid and cantilevered manner on the side of rectilinear bar 39.

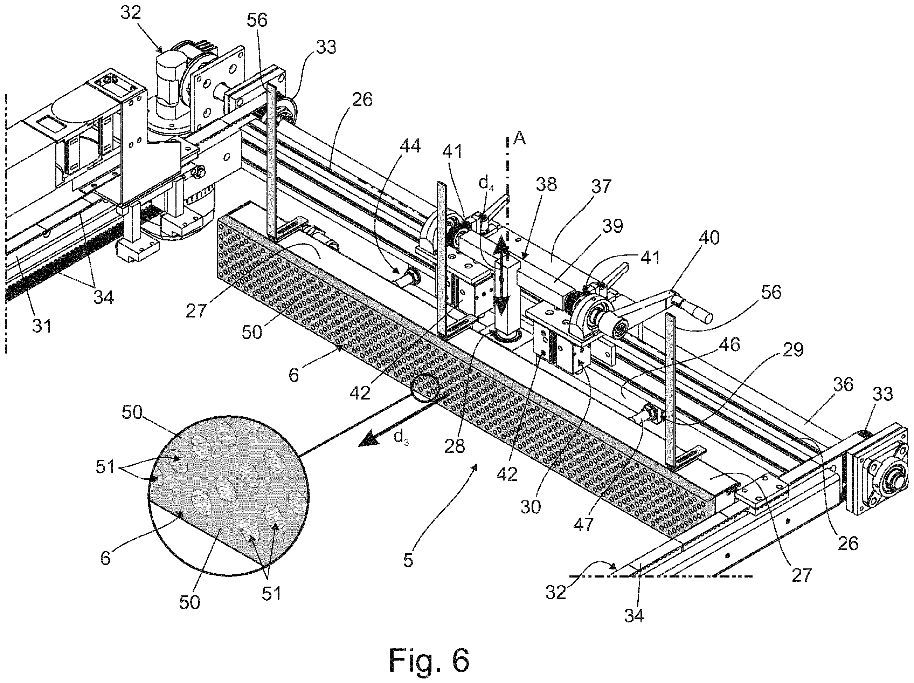

With particular reference to Figures 3 and 6, the actuator device 30, in turn, is preferably placed on the support beam 26, beneath the intermediate bracket 37, and is capable of lifting on command the intermediate bracket 37 by a few centimeters (for example 5 cm) with respect to support beam 26. Clearly, every vertical movement of the intermediate bracket translates into a vertical movement of the swivel joint 28 and of the floating bar 27 integral thereto.

In the example shown, in particular, the actuator device 30 is preferably pneumatically-operated and preferably comprises a pair of single-acting or double-acting cylinders 42, which are fixed to the support beam 26 in vertical position and beneath the intermediate bracket 37, on opposite sides of swivel joint 28, and are capable of lifting and lowering, on command, the bracket 37 with respect to the support beam 26.

With reference to Figures 5 to 9, the orienting and locking device 29, on the other hand, is preferably located on the support beam 26 and is selectively adapted to come into abutment against the floating bar 27, in two points arranged on opposite sides of swivel joint 28, so as to arrange the floating bar 27 substantially parallel to the support beam 26 and prevent any further rotation of the floating bar 27 about axis A.

More in detail, the orienting and locking device 29 is preferably attached underneath the support beam 26, and preferably comprises: a preferably U- or C- shaped, suspended rigid structure 44 which hangs beneath the central section of support beam 26, facing the swivel joint 28, and is capable of freely and horizontally moving to and from the floating bar 27 while remaining always parallel to itself; and at least one single-acting or double-acting cylinder 45, which is rigidly fixed beneath the central section of the support beam 26 and is capable of moving, on command, the suspended rigid structure 44 between a first operating position in which the rigid structure 44 is in abutment against the floating bar 27 in two points arranged on opposite sides of swivel joint 28, and a second operating position in which the rigid structure 44 is at a given distance from the floating bar 27, so as to allow the floating bar 27 to freely rotate about the rotation axis A of swivel joint 28.

In the example shown, in particular, the suspended rigid structure 44 preferably comprises: a rectilinear horizontal bar 46, preferably having a square section, which hangs underneath the support beam 26 so as to be substantially parallel to the latter, i.e. perpendicular to the direction ds, and with the capability of moving to and from the floating bar 27 while remaining always parallel to itself; and a pair of rectilinear projecting pins 47, which jut out cantilevered from the two ends of the rectilinear horizontal bar 46, towards the floating bar 27, preferably while remaining parallel to direction ds.

The pneumatic piston 45, in turn, is preferably rigidly fixed beneath the central section of support beam 26, in horizontal position and with the movable piston-rod arranged parallel to the direction ds and rigidly fixed to the rectilinear horizontal bar 46.

With reference to Figures 1 to 8, the vacuum gripping equipment 6, in turn, is preferably at least partially incorporated in the floating bar 7.

More in detail, the floating bar 7 is internally hollow, and the vacuum gripping equipment 6 preferably comprises: a mat of soft and elastically deformable material 50, which is preferably made of a polymeric material foam, is firmly fixed to the side of floating bar 7 on the opposite side with respect to the support beam 26, so as to cover a section of the floating bar 7 of given length and not less than the maximum width of the pallets 100 that can be unpacked by the machine, and is preferably provided with a multitude of transversal through ducts 51 that communicate with the internal cavity of the floating bar 27; and a flexible connection piping (not shown in the figures) which connects the internal cavity of floating bar 7 to a preferably electrically-operated, air suction assembly 52 that, in turn, is adapted to stably maintain the inside of floating bar 27 at a pressure lower than the ambient pressure.

In the example shown, in particular, the air suction assembly 52 is preferably fixed to the supporting framework 2, beneath the outlet conveyor 7.

The mat of soft and elastically deformable material 50, on the other hand, is preferably made of a closed-cell polymeric material foam, it has a thickness preferably ranging between 5 and 30 mm (millimeters), and preferably covers the lateral side of the floating bar 7 substantially for the entire length of floating bar 7.

Furthermore, the transversal through ducts 51 of the mat of soft and elastically deformable material 50 are preferably substantially rectilinear, and end at the wall of the floating bar 27, where there are small pass-through holes 54 that put into communication the transversal ducts 51 with the internal cavity of floating bar 27, so as to create a vacuum inside the various transversal ducts 51.

Preferably, the transversal through ducts 51 have a substantially circular cross-section, with a nominal diameter preferably less than 10 mm (millimeters) and more conveniently less than 5 mm.

With reference to Figures 3 to 7, the gripping head 5 is preferably also provided with a series of tray-pushing antennas 56, which are suitably spaced along the floating bar 27 and jut out cantilevered from the floating bar 27 upwards, preferably in a substantially vertical direction, so as to be able to come into abutment against the lateral side of the support-board or tray 104 lying on the upper layer 102 of the pallet to be unpacked 100.

Clearly, in a different embodiment, the tray-pushing antennas 56 may jut out cantilevered upwards starting from the support beam 26.

Preferably, the depalletizing machine 1 additionally also comprises a large tray-collecting storage 57 preferably with a suspended pocket structure, which is firmly fixed to the supporting framework 2 at the side of lifting platform 3, on the opposite side with respect to the auxiliary platform 4, and is arranged in an elevated position so that its upper mouth is substantially horizontally aligned with the elevated plane P.

When the gripping head 5 moves horizontally towards the upper layer 102 of the pallet to be unpacked 100, the tray-pushing antennas 56 that rise from the floating bar 27, rest on the lateral edge of the support-board or tray 104 which is resting above the upper layer 102 of pallet 100, so as to progressively push it in direction ds, towards the tray-collecting storage 27.

With reference to Figures 1, 2, 3 and 4, the products moving assembly 8, in turn, is preferably rigidly fixed to a horizontal crossbeam 58 of the rigid framework 2, which extends bridging the two vertical uprights 10 that flank and support the auxiliary platform 4, at a predetermined height from the ground.

Preferably, the products moving assembly 8 additionally comprises: a transversal pushing blade 60, oblong in shape, which is arranged in a horizontal position, alongside the vertical corridor engaged by the auxiliary platform 4, at a height from the ground slightly greater than that of the auxiliary platform 4 in the unloading position and/or than that of the product resting and/or advancing plane of the outlet conveyor 7; and a preferably electrically-operated, shifting device 61 which is interposed between the pushing blade 60 and the horizontal crossbeam 58 so as to support the pushing blade 60, and is capable of moving the pushing blade 60 horizontally in a direction d₅ preferably substantially parallel to the direction ds, so as to push the bottles 101 resting on the auxiliary platform 4 stationary in the unloading position, from the auxiliary platform 4 onto the outlet conveyor 7.

More in detail, the transversal pushing blade 60 is preferably substantially rectilinear, is preferably suspended beneath the horizontal crossbeam 58, and is preferably substantially perpendicular to the direction ds.

The shifting device 61, in turn, is preferably structured so as to move horizontally the pushing blade 60 in direction d₅ while maintaining the blade always substantially parallel to itself.

Therefore, the transversal pushing blade 60 moves horizontally while remaining substantially parallel to the support beam 26 of gripping head 5 and substantially perpendicular to the movement direction ds of the gripping head 5 on the elevated plane P.

More in detail, the transversal pushing blade 60 is placed at a height from the ground slightly greater than the height h₂, so as to be movable above and more or less flush with the auxiliary platform 4 stationary in the unloading position and with the product resting and/or advancing plane of the outlet conveyor 7.

Preferably, the transversal pushing blade 60 is moreover placed on the opposite side of the vertical corridor engaged by the auxiliary platform 4 with respect to the outlet conveyor 7, whereas the shifting device 61 is adapted to move the pushing blade 60 horizontally through the vertical corridor engaged by the auxiliary platform 4, so as to bring the pushing blade 60 into abutment against the entire row of bottles 101 resting on the auxiliary platform 4 stationary in the unloading position, and then to push the row of bottles 101 horizontally on the adjacent outlet conveyor 7.

In the example shown, in particular, the pushing blade 60 preferably consists of a rectilinear section bar 62, preferably made of metal material, which has an axial length greater than the nominal length of the rows of bottles 101 to be moved; and of a rectilinear stiffening bar 63, preferably having a square section and preferably made of metal material, which is firmly fixed to the back of the rectilinear section bar 62.

The shifting device 61, on the other hand, preferably comprises: a pair of articulated arms 64 with pantograph movement, which are mounted movable beneath the horizontal crossbeam 58 so as to be able to open/divaricate in scissors-like manner on a substantially horizontal plane, in the direction ds, and directly support the pushing blade 60; and a preferably electrically-operated, command servomotor 65 which is preferably located above the horizontal crossbeam 58, and is mechanically connected to both articulated arms 64 so as to be able to open and close them in a synchronized manner.

More in detail, each articulated arm 64 with pantograph movement preferably comprises: a preferably rectilinear and preferably made of metal material, rigid upper half-arm which extends horizontally and has the proximal end pivoted in axially rotatable manner on the horizontal crossbeam 58 so as to be able to freely rotate about a first vertical axis; a preferably rectilinear and preferably made of metal material, rigid lower half-arm which extends horizontally and has the proximal end pivoted in axially rotatable manner to the distal end of the upper half-arm so as to be able to freely rotate about a second vertical axis; and a gearing cascade which is adapted to transmit, to the lower half-arm, the rotation motion with which the upper half-arm rotates about the first axis, so that the lower half-arm is forced to rotate with respect to the upper half-arm about the second axis with a double angular speed with respect to the angular speed with which the upper half-arm rotates about the first axis and with a rotation section opposite the latter.

In other words, the gearing cascade of the articulated arm 64 is adapted to transmit, to the lower half-arm, the rotation motion with which the upper half-arm rotates around the first axis, so as to coordinate the scissor-like opening of the two half-arms with the rotation of the upper half-arm about the first axis.

The pushing blade 60, or rather the rectilinear bar 63, is preferably attached to the distal ends of the lower half-arms of both articulated arms 64 via as many swivel joints with vertical rotation axis.

The servomotor 65, in turn, is preferably mechanically connected to the upper half-arm of both articulated arms 64, so as to rotate both upper half-arms about the respective first rotation axes.

With reference to Figure 4, preferably the outlet conveyor 7 in turn consists of a linear belt conveyor of known type, which is preferably fixed to the supporting framework 2 in a substantially horizontal position, so that its product advancing plane is substantially coplanar to the upper shelf 19 of the auxiliary platform 4 in the unloading position.

In other words, the linear belt conveyor is preferably fixed to the supporting framework, so that its product advancing plane is at a height from the ground substantially equal to the height h₂.

Finally, the depalletizing machine 1 preferably moreover comprises an electronic control device 70 that is adapted to control the driving assemblies 12, 20 and 32, the orienting and locking device 29, the actuator device 30 and the servomotor 65 of shifting device 61, so as to automatedly unpack the pallet 100 temporarily resting on the lifting platform 3.

Preferably, the electronic control device 70 is furthermore capable of commanding/driving also the air suction assembly 52, so as to adjust/vary also the flow rate of the air that is sucked through the mat of soft and elastically deformable material 50.

The operation of depalletizing machine 1 differs from that of the depalletizing machine described in patent application EP3812320 A1 for the fact that the electronic control device 70, while approaching the gripping head 5 to the upper layer 102 of the pallet for picking up a new row of bottles 101, deactivates the orienting and locking device 29 so as to allow the floating bar 27 to freely rotate/oscillate about the reference axis A.

With reference to Figure 10, being free to rotate/ oscillate about axis A, on touching the lateral row of the upper layer 102 of the pallet, the floating bar 27 arranges itself automatically parallel to the row of bottles 101 to be picked up, thus bringing the vacuum gripping equipment 6 into abutment against all the bottles 101 that form the lateral row, regardless of the orientation/inclination of the row of bottles 101 with respect to the support beam 26.

Assuming that the vacuum gripping equipment 6 of the gripping head 5 is already active and capable of firmly grasping and holding the entire row of bottles 101, after bringing the vacuum gripping equipment 6 into abutment against all the bottles 101 of the lateral row of the upper layer 102 of the pallet, the electronic control device 70 lifts the floating bar 27 so as to lift (a few millimeters are sufficient) the bottles 101 of the lateral row from the immediately underlying support-board or tray 104; and then takes the gripping head 5 back into the first operating position so as to place the row of bottles 101 above the auxiliary platform 4.

During the return of the gripping head 5 in the first operating position, the electronic control device 70 newly activates the orienting and locking device 29 so as to newly arrange the floating bar 27 parallel to the support beam 26, and imped any further rotation of the floating bar 27 about axis A.

After aligning the gripping head 5 to the auxiliary platform 4, the electronic control device 70 lowers the floating bar 27 so as to lay down the entire row of bottles 101 on the auxiliary platform 4; and then temporarily deactivates the vacuum gripping equipment 6 so as to release the bottles 101 on the auxiliary platform 4.

Additionally, with reference to Figure 10, while the floating bar 27 approaches the lateral row of the upper layer 102 of the pallet, the tray-pushing antennas 56 of gripping head 5 come into abutment against the lateral edge of the support-board or tray 104 which is resting above the upper layer 102 of the pallet 100, step pushing it in the direction ds towards the tray-collecting storage 57 located on the opposite side with respect to the gripping head 5.

Clearly, the support-board or tray 104 rotates and falls by gravity directly into the tray-collecting storage 57, when the barycenter of the support-board or tray 104 moves beyond the perimeter of the upper layer 102 of the pallet to be unpacked 100.

The advantages resulting from the particular structure of gripping head 5 are remarkable and numerous.

Firstly, thanks to the presence of the swivel joint 28, the floating bar 27 is capable of orienting itself parallel to the row of bottles 101 to be picked up in complete autonomy and without the intervention of the operator, thus eliminating the problems deriving from an incorrect positioning of the pallet to be unpacked 100 on the lifting platform 3.

Furthermore, being dimensioned for transferring one row of products at a time from the top of the pallet 100 up to the outlet conveyor 7, the depalletizing machine 1 has bulks significantly smaller than those of a traditional depalletizing machine.

For the same reason, additionally, the depalletizing machine 1 does not require electric motors of great power/large dimensions with all the entailing savings.

Finally, the use of a vacuum gripping equipment 6 capable of autonomously adhering to the side of the bottles 101 regardless of the shape and/or dimension of the bottles, allows the gripping head 5 to firmly grasp and hold also tins, cans for beverages and other products without the need to be reconfigured.

It is finally clear that modifications and variations may be made to the above-described depalletizing machine 1 without thereby departing from the scope of protection of the present invention.

For example, in a less sophisticated embodiment of the gripping head 5, the mat of soft and elastically deformable material 50 can be replaced by a dense series/multitude of small-sized suction cups that are fixed cantilevered on the lateral side of the floating bar 27 preferably according to a quincunx distribution, and are connected to the air suction assembly 52 so as to attach themselves by vacuum on the side of the bottles 101 that form the lateral row of the upper layer 102 of the pallet to be unpacked 100.

Clearly, the suction cups are capable of adhering/ attaching themselves by vacuum also to tins, cans and the like.

Additionally, the centering assembly of the lifting platform 3 can be replaced by a preferably electrically- or pneumatically- operated, locking assembly which is placed on the horizontal deck 9, and is only capable of firmly locking the transportation platform 103 on the rigid deck 9.

Finally, instead of being incorporated in the gripping head 5, the floating-bar orienting and locking assembly may be directly fixed to the top of the supporting framework 2, preferably so as to be vertically aligned with the auxiliary movable platform 4.

## Claims

1. A depalletizing machine (1) of the type comprising: a rigid supporting framework (2) adapted to be stably rest on the ground; a lifting platform (3), which is adapted to receive resting on it the pallet to be unpacked (100) and is vertically movable on said rigid supporting framework (2), so as to lift the pallet to be unpacked (100) from the ground and to align the upper layer (102) of the pallet to an elevated reference plane (P); an auxiliary movable platform (4), which is dimensioned so as to receive/accommodate a row of products (101) coming from the pallet (100) stationary on the lifting platform (3), and is vertically movable on said rigid supporting framework (2), beside the lifting platform (3), between a loading position in which the auxiliary movable platform (4) is aligned to said reference plane (P) and is able to load/receive a row of products (101), and an unloading position in which the auxiliary movable platform (4) is spaced beneath said reference plane (P) and is able to unload the previously loaded row of products (101); and a gripping head (5), which is provided with a vacuum gripping equipment (6) capable of firmly grasping and holding an entire row of products (101), and is horizontally movable on said reference plane (P) between a first operating position in which the gripping head (5) is placed at the side of the lifting platform (3), substantially vertically aligned to the auxiliary movable platform (4), and a second operating position in which the gripping head (5) is vertically aligned to the lifting platform (3) and arranges said vacuum gripping equipment (6) resting on a lateral row of products (101) of the upper layer (102) of the pallet to be unpacked (100);
the gripping head (5) comprising: a support beam (26), which is horizontally movable on said rigid support framework (2) while remaining substantially parallel to itself; and an auxiliary floating bar (27) that supports the vacuum gripping equipment (6) and is attached to said support beam (26) so as to remain suspended alongside the latter;
the depalletizing machine being **characterised in that** the auxiliary floating bar (27) is fixed to the support beam (26) with the capability of freely oscillating with respect to the beam about a first substantially vertical axis (A), so as to be able to vary its orientation with respect to said support beam (26).

2. The depalletizing machine according to Claim 1, **characterised by** additionally comprising orienting and locking means (29) that are adapted to stably arrange and maintain the auxiliary floating bar (27) in a predetermined operating position with respect to said support beam (26).

3. The depalletizing machine according to Claim 2, wherein said orienting and locking means (29) are adapted to stably arrange and maintain said auxiliary floating bar (27) in a predetermined operating position in which the auxiliary floating bar (27) is substantially parallel to said support beam (26).

4. The depalletizing machine according to Claim 2 or 3, wherein said orienting and locking means comprise an orienting and locking device (29) which is located on the support beam (26) and/or on the auxiliary floating bar (27) and is capable, on command, of arranging and stably maintaining the floating bar (27) in said operating position.

5. The depalletizing machine according to any one of the preceding claims, wherein the central section of the auxiliary floating bar (27) is connected to the adjacent central section of the support beam (26) by means of a swivel joint (28) having a rotation axis coinciding with said first axis (A).

6. The depalletizing machine according to Claim 5, wherein the swivel joint (28) is fixed to the support beam (26) via the interposition of an adjustment mechanism (38) that allows to vary the angle of inclination of the joint rotation axis (A) with respect to said reference plane (P).

7. The depalletizing machine according to Claim 5 or 6, wherein said orienting and locking device (29) is placed on the support beam (26), and is adapted to selectively come into abutment against the auxiliary floating bar (27), at two points arranged on the opposite side of the swivel joint (28) .

8. The depalletizing machine according to any one of the preceding claims, wherein the auxiliary floating bar (27) is moreover vertically movable with respect to said support beam (26), so that its distance from the reference plane (P) can be varied.

9. The depalletizing machine according to Claim 8, wherein the auxiliary floating bar (27) is fixed to the support beam (26) also with the capability of moving vertically with respect to the beam, and the gripping head (5) is provided with an actuator device (30) that, on command, is able to lift and lower the auxiliary floating bar (27) with respect to the support beam (26).

10. The depalletizing machine according to any one of the preceding claims, wherein the support beam (26) and the auxiliary floating bar (27) are substantially rectilinear and are arranged perpendicular to the movement direction (d₃) of the gripping head (5) on said reference plane (P).

11. The depalletizing machine according to any one of the preceding claims, wherein the vacuum gripping equipment (6) is arranged on a lateral side of said auxiliary floating bar (27), on the side opposite to said support beam (26).

12. The depalletizing machine according to Claim 11, wherein the auxiliary floating bar (27) is internally hollow and said vacuum gripping equipment (6) comprises: a mat of soft and elastically deformable material (50), which is firmly fixed to the side of the auxiliary floating bar (27) and is provided with a multitude of transversal through ducts (51) that communicate with the internal cavity of the auxiliary floating bar (27); and a connection piping which connects the internal cavity of the auxiliary floating bar (27) to an air suction assembly (52) that is adapted to stably maintain the inside of the floating bar (27) at a pressure lower than the ambient pressure.

13. The depalletizing machine according to any one of the preceding claims, wherein the gripping head (5) is additionally provided with a series of tray-pushing antennas (56) that jut out cantilevered from the support beam (26) or from the auxiliary floating bar (27) upwards, so as to be able to come into abutment against the lateral edge of the support-board or tray (104) resting on the upper layer (102) of the pallet to be unpacked (100).

14. The depalletizing machine according to any one of the preceding claims, **characterized by** additionally comprising a tray-collecting storage (57) which is fixed on the supporting framework (2) at the side of the lifting platform (3), on the side opposite to the auxiliary movable platform (4), and is arranged in an elevated position so that its upper mouth is substantially horizontally aligned with said reference plane (P).

15. The depalletizing machine according to any one of the preceding claims, **characterised by** additionally comprising an outlet conveyor (7) that is adapted to transfer the bulk products (101) outside of the machine and is placed beneath said reference plane (P), beside the vertical corridor engaged by the auxiliary movable platform (4), so as to be adjacent to the auxiliary movable platform (4) when stationary in the unloading position; and a products moving assembly (8) which is adapted to move the products (101) from the auxiliary movable platform (4) to the outlet conveyor (7) when the auxiliary movable platform (4) is in said unloading position.

## Patentansprüche

1. Entpalletiermaschine (1) umfassend:
ein stabiles tragendes Gerüst (2), welches fest auf dem Boden steht;
eine Hebebühne (3), welche die zu entpackende Palette aufnimmt und welche senkrecht in dem stabilen tragenden Gerüst (2) bewegbar ist, um die zu entpackende Palette (100) vom Boden aufzunehmen und die obere Schicht (102) der Palette auf einer erhöhten Referenzebene (P) anzuordnen;
eine zusätzliche, neben der Hebebühne (3) befindliche bewegliche Bühne (4), die ausgestaltet ist, eine Artikellage (101) von der auf der Hebebühne (3) befindlichen Palette (100) aufzunehmen, und die senkrecht in dem stabilen tragenden Gerüst (2) zwischen einer Ladeposition, in welcher die zusätzliche bewegliche Bühne zur Referenzebene (P) zur Aufnahme einer Artikellage (101) angeordnet ist, und einer Abladeposition bewegbar ist, in der die zusätzliche bewegliche Bühne (4) unter der Referenzebene (P) angeordnet ist und die zuvor geladene Artikellage (10) abladen kann;
einen Greifkopf (5), ausgestattet mit einer Vakuumgreifeinrichtung (6), der in der Lage ist, eine komplette Artikellage sicher aufzugreifen und zu halten und der horizontal auf der Referenzebene (P) zwischen einer ersten Arbeitsposition, in welcher der Greifkopf an der Seite der Hebebühne (3) und im Wesentlichen senkrecht zur zusätzlichen beweglichen Bühne (4) angeordnet ist, und einer zweiten Arbeitsposition, in welcher der Greifkopf (5) senkrecht zur Hebebühne (3) ausgerichtet ist und die Vakuumgreifeinrichtung (6) auf einer seitlichen Artikellage (101) der oberen Schicht (102) der zu entpackenden Palette ausrichtet; wobei der Greifkopf (5) umfasst:
eine Halteschiene (26), die horizontal im stabilen tragenden Gerüst (2) bewegbar ist und dabei im Wesentlichen zu sich selbst parallel bleibt;
und ein zusätzlicher Schwebebalken (27), der die Vakuumgreifeinrichtung (6) hält und an der Halteschiene (26) angebracht ist und von dieser herabhängt;
und wobei die Entpalletiermaschine (1) weiterhin **dadurch gekennzeichnet ist, dass** der zusätzliche Schwebebalken (27) an der Halteschiene (26) derart befestigt ist, dass er in Bezug auf die Schiene frei um eine erste, im Wesentlichen vertikale Achse (A) pendeln kann, um seine Orientierung in Bezug auf die Halteschiene (26) verändern zu können.

2. Entpalletiermaschine (1) nach Anspruch 1, **dadurch gekennzeichnet, dass** diese zusätzlich Ausrichtungs- und Feststellungseinrichtungen (29) umfasst, um den zusätzlichen Schwebebalken (27) in eine vorbestimmte stabile Arbeitsposition in Bezug auf die Halteschiene (26) zu positionieren und dort zu halten.

3. Entpalletiermaschine (1) nach Anspruch 2, **dadurch gekennzeichnet, dass** besagte Ausrichtungs- und Feststellungseinrichtungen (29) besagten zusätzlichen Schwebebalken (27) in einer vorbestimmten stabilen Arbeitsposition positionieren und dort halten, in welcher der Schwebebalken (27) im Wesentlichen parallel zur Halteschiene (26) ist.

4. Entpalletiermaschine (1) nach Anspruch 2 oder 3, **dadurch gekennzeichnet, dass** besagte Ausrichtungs- und Feststellungeinrichtungen (29) ein Ausrichtungs- und Feststellungselement (29) umfassen, welches sich an der Halteschiene (26) und/oder am zusätzlichen Schwebebalken (27) befindet, um den Schwebebalken (27) auf Befehl in der Arbeitsposition zu positionieren und stabil zu halten.

5. Entpalletiermaschine (1) nach einem der vorhergehenden Ansprüche, **dadurch gekennzeichnet, dass** der mittlere Abschnitt des Schwebebalkens (27) mit dem angrenzenden mittleren Abschnitt der Halteschiene (26) über ein Drehgelenk (28) mit einer Rotationsachse, die der Achse (A) entspricht, verbunden ist.

6. Entpalletiermaschine (1) nach Anspruch 5, **dadurch gekennzeichnet, dass** das Drehgelenk (28) an der Halteschiene (26) über eine Zwischenschaltung eines Abgleichungsmechanismus (38) befestigt ist, um den Neigungswinkel der gemeinsamen Rotationsachse (A) in Bezug auf besagte Referenzebene (P) verändern zu können.

7. Entpalletiermaschine (1) nach Anspruch 5 oder 6, **dadurch gekennzeichnet, dass** besagtes Ausrichtungs- und Feststellungselement (29) auf der Halteschiene (26) angeordnet und dazu ausgerichtet ist, wahlweise an dem zusätzlichen Schwebebalken (27) an zwei Punkten, die auf der gegenüberliegenden Seite des Drehgelenks (28) angebracht sind, anzustoßen.

8. Entpalletiermaschine (1) nach einem der vorhergehenden Ansprüche, **dadurch gekennzeichnet, dass** der zusätzliche Schwebebalken (27) darüber hinaus vertikal in Bezug auf besagte Halteschiene (26) bewegbar ist, so dass seine Distanz zur Referenzebene (P) verändert werden kann.

9. Entpalletiermaschine (1) nach Anspruch 8, **dadurch gekennzeichnet, dass** der zusätzliche Schwebebalken (27) derart an der Halteschiene (26) befestigt ist, dass dieser vertikal zur Halteschiene (26) bewegbar ist, und dass der Greifkopf (5) mit einer Aktuatorvorrichtung versehen ist, welche den zusätzlichen Schwebebalken (27) auf Befehl in Bezug auf die Halteschiene (26) heben oder senken kann.

10. Entpalletiermaschine (1) nach einem der vorhergehenden Ansprüche, **dadurch gekennzeichnet, dass** die Halteschiene (26) und der zusätzliche Schwebebalken (27) im Wesentlichen gerade sind und im Wesentlichen senkrecht zur Bewegungsrichtung (d₃) des Greifkopfs (5) auf besagter Referenzebene (P) ausgerichtet sind.

11. Entpalletiermaschine (1) nach einem der vorhergehenden Ansprüche, **dadurch gekennzeichnet, dass** die Vakuumgreifeinrichtung (6) seitlich an besagtem zusätzlichem Schwebebalken (27) auf der der Halteschiene (26) gegenüberliegenden Seite angebracht ist.

12. Entpalletiermaschine (1) nach Anspruch 11, **dadurch gekennzeichnet, dass** der zusätzliche Schwebebalken (27) innen hohl ist, und dass besagte Vakuumgreifeinrichtung (6) eine aus weichem und elastisch verformbarem Material bestehende Unterlage umfasst, die fest an der Seite des zusätzlichen Schwebebalkens (27) angebracht ist und die mit einer Anzahl von Durchgangskanälen (51) versehen ist, die mit dem Innenraum des zusätzlichen Schwebebalkens (27) verbunden sind; und eine Rohrverbindung, die den Innenraum des zusätzlichen Schwebebalkens (27) mit einer Luftansaugeinrichtung (52) verbindet, die dazu eingerichtet ist, den Luftdruck im Innenraum des Schwebebalkens (27) dauerhaft geringer als den umgebenden Luftdruck zu halten.

13. Entpalletiermaschine (1) nach einem der vorhergehenden Ansprüche, **dadurch gekennzeichnet, dass** der Greifkopf (5) zusätzlich mit einer Serie von Kontaktbügeln (56) ausgestaltet ist, die aus der Halteschiene (26) oder dem zusätzlichen Schwebebalken (27) nach oben herausragen, um eine Verbindung zur Seitenkante der Palettenauflage (104), die auf der obersten Schicht (102) der zu entpackenden Palette liegt, herzustellen.

14. Entpalletiermaschine (1) nach einem der vorhergehenden Ansprüche, **dadurch gekennzeichnet, dass** diese weiterhin ein Palettensammellager (57) umfasst, welches am tragenden Gerüst (2) auf der Seite der Hebebühne (3) und auf der der zusätzlichen beweglichen Bühne (4) gegenüberliegenden Seite angeordnet ist, und dass das Palettensammellager (57) in einer angehobenen Position angebracht ist, so dass seine obere Öffnung im Wesentlichen horizontal zur Referenzebene (P) ausgerichtet ist.

15. Entpalletiermaschine (1) nach einem der vorhergehenden Ansprüche, **dadurch gekennzeichnet, dass** diese weiterhin ein Auslassförderband (7) umfasst, welches dazu ausgerichtet ist, die Artikel aus der Maschine herauszubefördern, und welches sich unterhalb der Referenzebene (P), neben dem vertikalen Schacht für die zusätzliche bewegliche Bühne (4) befindet, um an die zusätzliche bewegliche Bühne (4) anzugrenzen, wenn sich diese in stationärer Entladeposition befindet; und dass die Entpalletiermaschine (1) eine Artikelfördereinrichtung (8) umfasst, die die Artikel (101) von der zusätzlichen beweglichen Bühne (4) zum Auslassförderband (7) befördert, wenn sich die zusätzliche bewegliche Bühne (4) in besagter Entladeposition befindet.

## Revendications

1. Machine de dépalettisation (1) du type comprenant : un cadre de support rigide (2) adapté pour reposer de manière stable sur le sol ; une plate-forme élévatrice (3), qui est adaptée pour recevoir, reposant sur celle-ci, la palette à déballer (100) et est mobile verticalement sur ledit cadre de support rigide (2), de manière à soulever la palette à déballer (100) du sol et aligner la couche supérieure (102) de la palette sur un plan de référence surélevé (P) ; une plate-forme mobile auxiliaire (4), qui est dimensionnée pour recevoir/accueillir une rangée de produits (101) provenant de la palette (100) stationnaire sur la plate-forme élévatrice (3), et est mobile verticalement sur ledit cadre de support rigide (2), à côté de la plate-forme élévatrice (3), entre une position de chargement dans laquelle la plate-forme mobile auxiliaire (4) est alignée sur ledit plan de référence (P) et est capable de charger/recevoir une rangée de produits (101), et une position de déchargement dans laquelle la plate-forme mobile auxiliaire (4) est espacée au-dessous dudit plan de référence (P) et est capable de décharger la rangée de produits (101) précédemment chargée ; et une tête de préhension (5), qui est pourvue d'un équipement de préhension par le vide (6) capable de saisir et de maintenir fermement une rangée entière de produits (101), et est mobile horizontalement sur ledit plan de référence (P) entre une première position de fonctionnement dans laquelle la tête de préhension (5) est placée sur le côté de la plate-forme élévatrice (3), sensiblement alignée verticalement sur la plate-forme mobile auxiliaire (4), et une deuxième position de fonctionnement dans laquelle la tête de préhension (5) est alignée verticalement sur la plate-forme élévatrice (3) et dispose ledit équipement de préhension par le vide (6) en appui sur une rangée latérale de produits (101) de la couche supérieure (102) de la palette à déballer (100) ;
la tête de préhension (5) comprenant : une poutre de support (26), qui est mobile horizontalement sur ledit cadre de support rigide (2) tout en restant sensiblement parallèle à elle-même ; et une barre flottante auxiliaire (27) qui soutient l'équipement de préhension par le vide (6) et est fixée à ladite poutre de support (26) de manière à rester suspendue le long de cette dernière ;
la machine de dépalettisation étant **caractérisée en ce que** la barre flottante auxiliaire (27) est fixée à la poutre de support (26) avec la capacité d'osciller librement par rapport à la poutre autour d'un premier axe sensiblement vertical (A), de manière à permettre la variation de son orientation par rapport à ladite poutre de support (26).

2. Machine de dépalettisation selon la revendication 1, **caractérisée en ce qu'**elle comprend en outre des moyens d'orientation et de verrouillage (29) qui sont adaptés pour agencer et maintenir de manière stable la barre flottante auxiliaire (27) dans une position de fonctionnement prédéterminée par rapport à ladite poutre de support (26).

3. Machine de dépalettisation selon la revendication 2, dans laquelle lesdits moyens d'orientation et de verrouillage (29) sont adaptés pour agencer et maintenir de manière stable ladite barre flottante auxiliaire (27) dans une position de fonctionnement prédéterminée dans laquelle la barre flottante auxiliaire (27) est sensiblement parallèle à ladite poutre de support (26).

4. Machine de dépalettisation selon la revendication 2 ou 3, dans laquelle lesdits moyens d'orientation et de verrouillage comprennent un dispositif d'orientation et de verrouillage (29) qui est situé sur la poutre de support (26) et/ou sur la barre flottante auxiliaire (27) et est capable, sur commande, de disposer et de maintenir de manière stable la barre flottante (27) dans ladite position de fonctionnement.

5. Machine de dépalettisation selon l'une quelconque des revendications précédentes, dans laquelle la section centrale de la barre flottante auxiliaire (27) est reliée à la section centrale adjacente de la poutre de support (26) au moyen d'un joint articulé (28) ayant un axe de rotation coïncidant avec ledit premier axe (A).

6. Machine de dépalettisation selon la revendication 5, dans laquelle le joint articulé (28) est fixé à la poutre de support (26) par l'interposition d'un mécanisme de réglage (38) qui permet de faire varier l'angle d'inclinaison de l'axe de rotation du joint (A) par rapport audit plan de référence (P).

7. Machine de dépalettisation selon la revendication 5 ou 6, dans laquelle ledit dispositif d'orientation et de verrouillage (29) est placé sur la poutre support (26), et est adapté pour venir sélectivement en butée contre la barre flottante auxiliaire (27), en deux points agencés sur le côté opposé du joint articulé (28).

8. Machine de dépalettisation selon l'une quelconque des revendications précédentes, dans laquelle la barre flottante auxiliaire (27) est en outre mobile verticalement par rapport à ladite poutre de support (26), de sorte que sa distance par rapport au plan de référence (P) peut varier.

9. Machine de dépalettisation selon la revendication 8, dans laquelle la barre flottante auxiliaire (27) est fixée à la poutre de support (26) également avec la capacité de se déplacer verticalement par rapport à la poutre, et la tête de préhension (5) est pourvue d'un dispositif actionneur (30) qui, sur commande, est capable de lever et d'abaisser la barre flottante auxiliaire (27) par rapport à la poutre de support (26).

10. Machine de dépalettisation selon l'une quelconque des revendications précédentes, dans laquelle la poutre de support (26) et la barre flottante auxiliaire (27) sont sensiblement rectilignes et sont disposées perpendiculairement à la direction de déplacement (d₃) de la tête de préhension (5) sur ledit plan de référence (P).

11. Machine de dépalettisation selon l'une quelconque des revendications précédentes, dans laquelle l'équipement de préhension par le vide (6) est disposé sur un côté latéral de ladite barre flottante auxiliaire (27) sur le côté opposé à ladite poutre de support (26).

12. Machine de dépalettisation selon la revendication 11, dans laquelle la barre flottante auxiliaire (27) est intérieurement creuse et ledit équipement de préhension par le vide (6) comprend : un tapis de matériau souple et élastiquement déformable (50), qui est fermement fixé sur le côté de la barre flottante auxiliaire (27) et est pourvue d'une multitude de conduits traversants transversaux (51) qui communiquent avec la cavité interne de la barre flottante auxiliaire (27) ; et une tuyauterie de raccordement qui relie la cavité interne de la barre flottante auxiliaire (27) à un ensemble d'aspiration d'air (52) qui est adapté pour maintenir de manière stable l'intérieur de la barre flottante (27) à une pression inférieure à la pression ambiante.

13. Machine de dépalettisation selon l'une quelconque des revendications précédentes, dans laquelle la tête de préhension (5) est en outre pourvue d'une série d'antennes de poussée de plateaux (56) qui font saillie en porte-à-faux depuis la poutre de support (26) ou depuis la barre flottante auxiliaire (27) vers le haut, de manière à pouvoir venir en butée contre le bord latéral de la planche ou du plateau de support (104) reposant sur la couche supérieure (102) de la palette à déballer (100).

14. Machine de dépalettisation selon l'une quelconque des revendications précédentes, **caractérisée en ce qu'**elle comprend en outre un stockage collecteur de plateaux (57) qui est fixé sur le cadre de support (2) du côté de la plate-forme élévatrice (3), sur le côté opposé à la plate-forme mobile auxiliaire (4), et est disposée dans une position élevée de sorte que son embouchure supérieure soit sensiblement alignée horizontalement avec ledit plan de référence (P).

15. Machine de dépalettisation selon l'une quelconque des revendications précédentes, **caractérisée en ce qu'**elle comprend en outre un transporteur de sortie (7) qui est adapté pour transférer les produits en vrac (101) à l'extérieur de la machine et est placé au-dessous dudit plan de référence (P), à côté du un couloir vertical mis en prise par la plate-forme mobile auxiliaire (4), de manière à être adjacent à la plate-forme mobile auxiliaire (4) lorsqu'il est stationnaire dans la position de déchargement ; et un ensemble de déplacement de produits (8) qui est adapté pour déplacer les produits (101) de la plate-forme mobile auxiliaire (4) vers le transporteur de sortie (7) lorsque la plate-forme mobile auxiliaire (4) est dans ladite position de déchargement.
